Europäisches Patentamt

European Patent Office

Office européen des brevets

(11) Publication number: **0 274 143**
**A2**

(12) **EUROPEAN PATENT APPLICATION**

(21) Application number: 87202244.7

(22) Date of filing: 17.11.87

(51) Int. Cl.⁴: **E21B 43/27**

(30) Priority: 10.12.86 FR 8617388

(43) Date of publication of application:
13.07.88 Bulletin 88/28

(84) Designated Contracting States:
DE GB IT NL

(71) Applicant: **PUMPTECH N.V.**
**Atlantic House Noorderlaan 147 Bus 5C**
**B-2030 Antwerpen(BE)**

(72) Inventor: **Bertaux, Jacques**
**Les Flaches**
**F-42570 St Heand(FR)**
Inventor: **Prouvost, Laurent**
**Part Sauzeat**
**F-42290 Sorbiers(FR)**

(74) Representative: **Richebourg, Michel François**
**Etudes et Fabrication Dowell Schlumberger**
**Z.I. Molina La Chazotte B.P. 90**
**F-42003 Saint-Etienne Cédex 1(FR)**

(54) **Process for stimulation of an underground hydrocarbon formation by acidizing.**

(57) This invention concerns a process for stimulation of an underground hydrocarbon formation by acidizing, characterised in that, before the phase of retrieval of the treatment acid formulation, the zone of the formation close to the wellbore is raised to, or maintained at, a temperature at least equal to that of the formation more distant from the well. Any means may be used to achieve this end.

Figure 3

## Process for stimulation of an underground hydrocarbon formation by acidizing.

The object of the present invention is a process for the stimulation of an underground hydrocarbon formation by acidizing.

When a hydrocarbons reservoir is insufficiently productive, or becomes so, it is common practice to stimulate the reservoir in order to increase its permeability.

The said permeability is, with the passage of time, greatly diminished by various well known factors, such as the progressive blocking of the pores, channels and or cracks within the underground formation. Thus, in the case of sandstone formations, the damage is generally due to plugging of the different interstices - pores, channels, cracks ....-by silicates, alumino-silicates or more commonly by particles of clay. This blocking of the interstices is all the more damaging when it occurs in zones of the formation in the proximity of the wellbore.

In order to make good this damage and increase the productivity of the formation, the previous state of the art has proposed several different kinds of treatment.

One may resort to methods of mechanically fracturing the rock. Such fracturing, within the formation, is provoked by injecting fluids at pressure in excess of that which the said rock can resist.

Another known process used in endeavours to restore a damaged underground formation to its initial permeabilty, consists in matrix acidizing of the formation. The compounds lodged in the interstices of the formation are dissolved by a suitable acid or mixture of acids, thus clearing or even enlarging these interstices. The acids are injected at pressure higher than that of the hydrocarbons present but nevertheless lower than that required to fracture the rock.

A commonly used mixture of acids, called "mud acid" is composed of 12 % hydrochloric acid (HCl) and 3 % hydrofluoric acid (HF).

Other well known usable mixtures are 13.5 % HCl, 1.5 % HF or 6 % HCl, 1.5% HF.

The cleared, or enlarged, interstices thus facilitate fluid flow.

When the pressure is reduced at the end of treatment, the back pressure then pushes the acid treatment fluid from the formation, causing it to inundate the well and return towards the surface (phase of retrieval or clearing of the acid treatment fluid).

The reality however, is far from this perfect. The method, whilst being very effective, must be used with caution, partcularly in sandstone formations.

It should be noted that the acid action is non-selective with regard to the composition of the material causing intersticial blockage, and that it generates large quantities of precipitates, detritus and by-products of the reaction between the acids and the rock constituting the formation. Thus large scale precipitations, caused by clays and feldspaths, can scarcely be avoided during implementation of such treatment in sandstone formations.

In such conditions, the problem can be even more serious, an almost total sealing-up of the formation can result from acid treatment. Effectively, when the acid is pushed back from the formation, particles, initially lodged in the interstices and/or those particles newly generated by the acid action, can once again plug the said interstices. The resultant plugging can be all the more damaging if it occurs near the wellbore.

These particles, which are by-products of the reaction between the acid and the rocks constituting the formation, have been abundantly described in the specialist literature and particularly by the following authors :

-Labrid J.C. - 1975 "Thermodynamic and kinetic aspect of argillaceous sandstone acidizing". Journal of the Society of Petroleum Engineers , April 1975, 117-128.

-Shaugnessy C.M. - Kunze K.R. - 1981 "Understanding sandstone acidizing leads to improved field practices". Journal of Petroleum Technology, July 1981, 1196-1202.

-Crowe C.W. - 1984 "Precipitation of hydrated silica from spent hydrofluoric acid - How much of a problem is it ?". SPE paper 13083.

-Walsh M.P. - Lake L.W. - Schechter R.S. - 1982 "A description of chemical precipitation mechanisms and their role in formation damage during stimulation by hydrofluoric acid". Journal of Petroleum Technology, Sept.1982, 2097-2112.

It has always been thought that these particles appear during the acid's gradual neutralisation as it is forced, under pressure, away from the injection well and penetrates into the formation - becoming saturated as it progresses, forming precipitates and freeing the detritus.

Attempts have been made to solve this problem by, in particular, proposing new acid formulations, such as mixtures of hydrochloric acid (HCl) and hydrofluoric acid (HF) in weak solution of HCl/HF. The advantage of such formulations - described, notably, by Mc Leod H.O. 1980 "Matrix acidizing", Journal of Petroleum

the well.

Holding the temperature at a level at least equal to that of the formation, or raising it to this level, thus eliminates the undesirable consequences of a temperature gradient.

It is also possible to invert the temperature gradient, by heating the zone near to the wellbore to a temperature higher than that of the formation, thereby achieving an improved result, as the saturated acid flowing towards the warmer zone can then become supersaturated.

Any method may be used to achieve the desired objective. Thus in the case where an overflushing fluid is not used, hot injection of the treating acid, or at least the last part of it, can be envisaged. The use of hot acid formulations will, of course, necessitate certain precautions, particularly as regards problems of corrosion. When an overflushing fluid is used, it is sufficient, at the end of the treatment, to inject this at the reqiured temperature

-at least equal to that of the formation.

Using this invention, a decisive improvement on the commonly used process for acid treatment of an udnerground hydrocarbon formation has been achieved. This is particularly well illustrated by the following examples. The new process can be implemented using elements known to the previos state of the art :

-for acid formulations, known mixtures of HCl and HF can be used, particularly the mixture 12% HCl and 3% HF. It is equally possible to use the two acids, HCl and HF, successively;

-for a possible overflushing fluid a brine can be used and particularly an ammonium chloride solution, or a 5% to 7.5% hydrochloric acid solution, or a heavy oil ("diesel oil").

Tests have been carried out using core samples of a sandstone from North West Europe ("rotliegendes"), the mineralogical composition of which is shown in table 1 below :

## TABLE 1 : Mineralogical composition of the samples (analysis by X-ray diffraction) : Vosges sandstone ("Gres des Vosges").

| | % |
|---|---|
| Quartz | 85 - 90 |
| Feldspath = microcline | 5 - 15 |
| Mica = muscovite | traces |
| Carbonates = dolomite | traces |
| Clays = illite | 5 - 10 |
| Hydroxides of iron | 1 - 2 |

Acid treatment of this formation generates potassium fluorosilcate precipitates because it contains potassium minerals, such as feldspaths or illite.

Flow tests were carried out in the following manner :

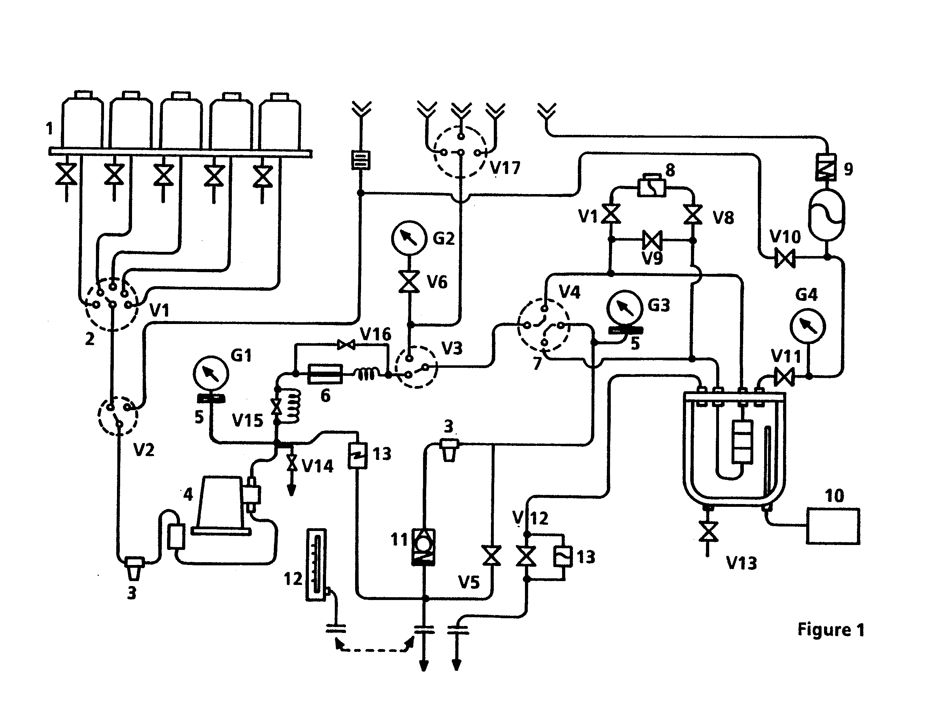

Approximately 10 PV (10 times the pore volume of the sample) of a 15% hydrochloric acid "preflushing" solution, was made to flow through core samples measuring 28 cm $\times$ 2.5 cm (11.02 ins $\times$ 0.98 ins). This was then followed by approximately 10 to 15 PV (10 to 15 times the pore volume) of a 12% HCl - 3% HF solution, at a flow rate of approximately 2 cc/min. The initial and final permeabilties of the core samples were measured with the apparatus illustrated in figure 1, using a 3% NH₄Cl brine as reference solution, the samples being placed in a core oven.

Shown schematically in figure 1 are :

- 1 : the reservoirs,

Technology, Dec. 1984, 2055-2069 - is that they effectively limit the problems of precipitation, but the said phenomenon of precipitation and the appearance of by-products, has never been totally avoided in this way.

Using another variation of the previous state of the art, it is proposed to reduce the harmful effects of the said precipitates by forcing them away from the zone where their presence is most damaging : the zone near the wellbore. This is done by means of an "overflushing" fluid. The function of this fluid is to push the acid and the precipitates formed by it, during its progression and gradual neutralisation in the formation, away from the wellbore. Different overflushing fluids are used, and notably, brines - generally of ammonium chloride, 5% to 7.5% solutions of hydrochloric acid or heavy oils ("diesel").

It will be noted that this technique is, likewise, based on the hypothesis of the precipitates being formed, little by little, as the acid progresses and is neutralized in the formation.

The use of an overflushing fluid as described above, in accordance with the previous state of the art, however, has not completely solved the problem. The precipitates remain within the formation and are, at least in part, washed back towards the well during the later retrieval of the acid.

In accordance with the present invention, the problem of precipitates and particles caused during acidizing treatment of hydrocarbon bearing underground formations, has been reconsidered; a new formulation of the problem, a new analysis of it and the resulting solution, are proposed.

There is, effectively, evidence to show that the maximum risk of precipitation occurs, not when the acid penetrates into the formation, but on the contrary, when the acid is washed back from the formation towards the well, passing through the colder zone of the formation near to the wellbore - the zone where the precipitates have the worst effect on the post-treatment productivity of the reservoir.

This new conception of the problem opposes the hypothesis commonly accepted, as indicated above, that the said precipitates are formed progressively as the acid penetrates the formation.

The new way of considering the problem is based on the following observations :

-During the classical process of matrix acidizing of a well, the injection of the fluids - acid treatment fluid, the "overflush" fluid or even a "preflush" fluid - results in relative cooling of the zone near to the said well. The said fluids, being injected cold, cause a temperature gradient between the zone near to the well (cooled by the fluids), and the warmer bulk of the formation.

-The acid treatment fluid penetrates from the cold zone into the warmer zones, becoming progressively neutralized until saturation is reached. Whenever the concentration of dissolved substances exceeds the saturation limit there will be precipitation, but because the acid progresses, through the temperature gradient, towards the warmer zone, it is probable that only a few precipitates are formed at the same time in a same area.

In addition, the acid spreads radially through the zones and the effects attibuted to precipitates are less and less of a disadvantage due to a dilution effect.

-Finally, it has been shown that in the region of average downhole temperatures of the order of 65 deg C (149 deg F), the acid becomes very rapidly saturated in substances (Si, Al, K, ....) likely to produce damaging precipitates, and that in these circumstances even a small drop in temperature, of approximately 15 deg C (27 deg F), is sufficient to provoke significant precipitation.

Furthermore, it has been shown that the injection of fluids at ambient temperature is sufficient to cause, downhole, a localized temperature drop of this order.

In the light of these observations, it can be appreciated that the situation becomes very critical when the acid is forced back into the wellbore, because the saturated acid, in flowing radially back towards the cold pole of the temperature gradient, increases the risk of precipitation, and thus the risk of a concentration of precipitates occurring in this very critical zone.

This explanation of the phenomenon is completely new and in opposition to that generally accepted. Surprisingly, it has been established that the damaging precipitates are formed principally during the retreat of the acid from the formation (towards the well), and that the temperature is a very important factor in this process.

In accordance with the invention, a new technique is proposed, to avoid the formation of precipitates during retrieval of the acid. Establishing, in a novel way, that the precipitation is the result of the temperature gradient, it is proposed to cancel out, or even invert, the temperature gradient and thus eliminate the said precipitation.

In accordance with the invention, measures must be taken to avoid the drop in temperature which occurs in the zone near the wellbore, during injection of fluids at ambient temperature (acid treatment fluid, possibly "overflush" fluid), by reheating the zone.

In accordance with the invention, the process of stimulating an uderground hydrocarbon formation by acidizing, is characterised in that, before the acid retrieval phase, the zone near to the wellbore is raised to, or maintained at, a temperature at least equal to that prevailing in zones of the formation further away from

- 2 : a fluid selector,
- 3 : filters,
- 4 : a positive-displacement pump,
- 5 : separators,
- 6 : a pulsation damper,
- 7 : a cell mode selector,
- 8 : a differential pressure cell,
- 9 : a confining pressure regulator,
- 10 : a temperature regulator,
- 11 : a back pressure regulator,
- 12 : the flowmeter to measure the return-flow rate of the gas,
- 13 : rupture discs,
- G1, G2, G3, G4, : pressure gauges indicating the fluid pressure, the nitrogen pressure, the back pressure and the confining pressure, respectively.
- V1 to V6 : various valves.

In a first test, following injection of the "mud acid", with consequent, expected and sought after, increase in permeabilty, the core sample temperature was decreased by = 15 deg C (27 deg F), from 65 deg C to 50 deg C (from 149 deg F to 122 deg F).

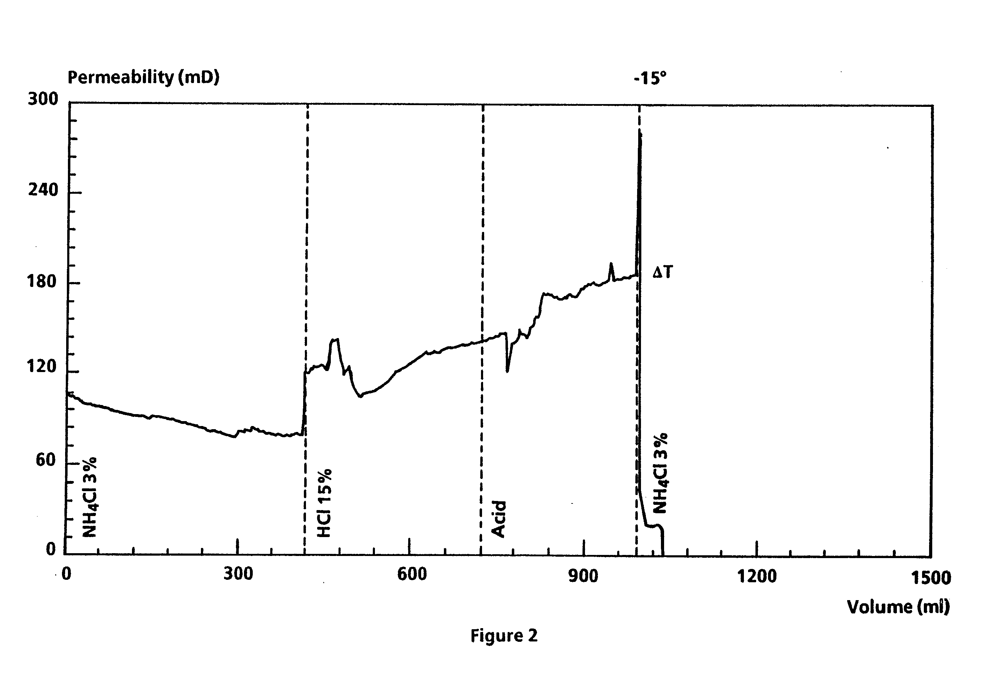

The results are shown in figure 2.

As explained above a 3% $NH_4Cl$ brine solution is first made to flow through the sample. This cleans the sample and allows a first premeability measurement to be made : approximately 100 milliDarcy.

Next, a 15% hydrochloric acid solution is injected for preflushing. In fact, this solution prepares the sample for the subsequent "mud acid" treatment, by dissolving the carbonates and flushing out the brines trapped within it.

Next follows the treatment acid (12% HCl - 3% HF), which dissolves the clays, the alumino-silicates ...etc.

The permeability of the sample increases (3rd part of the curve) to about 190 milliDarcy.

The temperature of the sample is then reduced by = 15 deg C (27 deg F) and its permeabilty measured using the reference solution - 3% $NH_4Cl$ : an abrupt drop in permeabilty, from approximately 190 milliDarcy to approximately 0 milliDarcy can be observed. Photographs obtained from examination of the sample, after the acid treatment, using a scanning electron microscope and by X-ray diffraction spectrography, show clearly the in-situ precipitates of potassium fluorosilicates.

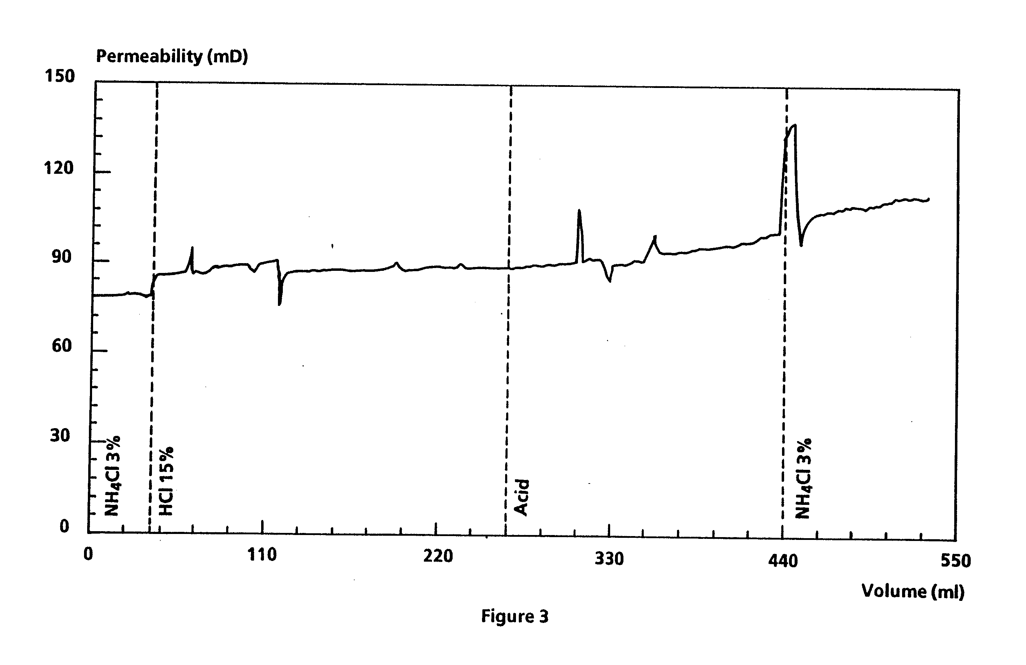

In a second test, the evolution of the permeabilty is monitored whilst holding the core sample temperature constant at 65 deg C (149 deg F) - figure 3 ; the same method and same type of core sample are used.

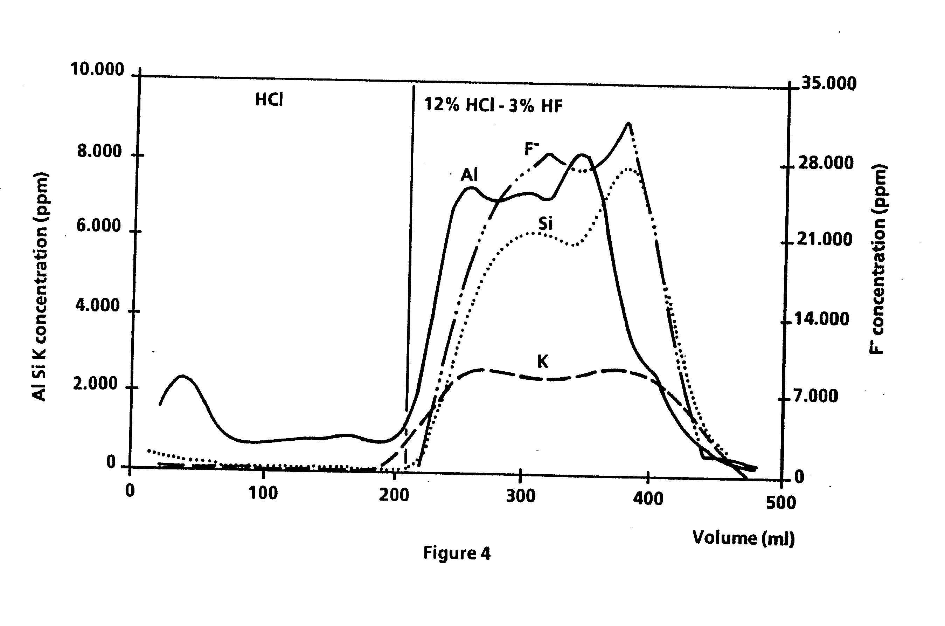

The curve shows that the permeabilty of the sample increases from 80 to 115 milliDarcy. In this test the precipitates are collected in the pipe from the outlet of the cell, where the temperature drops rapidly. These precipitates, in the form of cubic crystals, have been identified using X-ray diffraction as potassium fluorosilicates. The effluent obtained when the treating acid comes out of the sample is analysed by chromatography, the results being shown in figure 4 : this shows a concentration of Si slightly less than that of Al and a variation of the concentration of F parallel to that for Si. This is completely coherent with the appearance of potassium fluorosilicate precipitates at the outlet from the sample, and shows that the acid has become saturated in these substances during its passage through it. Precipitation has not affected the permeability of the sample because there has been no temperature drop within it.

It is evident however that the precipitation, which has taken place in the outlet pipe, would have occurred in the core sample if the temperature had dropped.

These two tests show clearly that maintaining the temperature is a way of preventing precipitation within the sample.

In the examples given above, clays containing potassium were chosen, chiefly, because the crystallized precipitates of potassium lend themselves to easy observation, and because they give a very clear demonstration of the effect of precipitates on the permeabilty.

Nevertheless, it should be pointed out that, according to the literature on the subject, numerous other unwanted precipitates are liable to affect acidizing of sandstone reservoirs (colloidal silica, ammonium fluoride, potassium and sodium fluoroaluminates).

Precipitation of these by-products obeys the same laws and is, in the same way, much influenced by the temperature.

It is therefore evident that the technique developed by the present invention will be beneficial in all cases of acid treatment of hydrocarbon reservoirs.

## Claims

1. Process for stimulation of an underground hydrocarbon formation by acidizing, characterised in that, before the phase of retrieval of the treatment acid formulation, the zone of the formation near to the wellbore is raised to, or maintained at, a temperature at least equal to that of the formation zone more distant from the well.

2. Process in accordance with claim 1, characterised in that an "overflushing" fluid is injected after injection of the treatment acid formulation.

3. Process in accordance with claim 2, characterised in that, at the end of treatment, the "overflushing" fluid is injected at a temperature at least equal to that of the formation zone distant from the well.

4. Process in accordance with any one of claims 1 to 3, characterised in that the acid formulation is a mixture HCl - HF or results from successive injection of these two acids.

5. Process in accordance with claim 4, characterised in that the acid formulation is a mixture 12% HCl - 3% HF.

6. Process in accordance with any one of claims 2 to 5, characterised in that the "overflushing" fluid is a brine, a solution of 5% to 7.5% HCl, or a heavy oil ("diesel oil").

7. Process in accordance with claim 6, characterised in that the "overflushing" fluid is a solution of ammonium chloride.

Figure 1

Figure 2

Figure 3

**Figure 4**